# EUROPEAN PATENT SPECIFICATION

(11) **EP 3 960 442 B1**
(45) Date of publication and mention of the grant of the patent: **22.05.2024**
(21) Application number: 20796364.6
(22) Date of filing: 24.04.2020
(51) Int. Cl.: B32B 5/02, B32B 7/12, B32B 27/08, B32B 27/12, B32B 27/20, B32B 27/30, B32B 27/32, D04H 3/007, D04H 3/11, B29C 55/02, B29C 65/08, B29C 65/48

(54) **STRETCHABLE LAMINATE AND METHOD FOR MANUFACTURING SAME**
DEHNBARES LAMINAT UND VERFAHREN ZUR HERSTELLUNG DAVON
STRATIFIÉ ÉTIRABLE ET SON PROCÉDÉ DE FABRICATION

(30) Priority: 26.04.2019 JP 2019085077
(43) Date of publication of application: 02.03.2022
(73) Proprietor: Nitto Denko Corporation, Ibaraki-shi, Osaka 567-8680 (JP)
(72) Inventor: UCHIDA, Sho, Ibaraki-shi, Osaka 567-8680 (JP); NAKAGAWA, Muneshige, Ibaraki-shi, Osaka 567-8680 (JP); IKISHIMA, Shinsuke, Ibaraki-shi, Osaka 567-8680 (JP)
(74) Representative: Müller-Boré & Partner Patentanwälte PartG mbB
(86) International application number: PCT/JP2020/017772
(87) International publication number: WO 2020/218540

(56) References cited:
- EP-A1- 2 223 796
- EP-A1- 3 023 247
- WO-A1-96/21760
- WO-A1-2015/095731
- JP-A- 2001 146 670
- JP-A- 2011 514 178

## Description

### Technical Field

The present invention relates to a stretchable laminate and a method of manufacturing the laminate.

### Background Art

Various stretchable laminates have been proposed as members for articles such as sanitary articles, for example, a diaper and a mask (see, for example, Patent Literatures 1 to 5). A stretchable laminate formed of two or more layers including an elastomer layer has been proposed as such member. Typically, a stretchable laminate having a non-woven fabric layer on at least one side of an elastomer layer has been proposed. However, the elongation of the non-woven fabric layer is not sufficient, and hence desired stretchability is not obtained in some cases. A method including subjecting a non-woven fabric to activation treatment in advance before the manufacture of the stretchable laminate (preactivation) has been known as a method of improving the elongation of the non-woven fabric. However, depending on the kind of the non-woven fabric, the preactivation may break the non-woven fabric, or may make a hole in the surface of the non-woven fabric to make it impossible to obtain desired performance.

### Citation List

### Patent Literature

[PTL 1] JP 2012-187857 A
[PTL 2] JP 3830818 B2
[PTL 3] EP 0 803 602 A1
[PTL 4] WO 2015/095731 A1
[PTL 5] EP 2 223 796 A1

### Summary of Invention

### Technical Problem

The present invention has been made to solve the above-mentioned problems of the related art, and an object of the present invention is to provide a stretchable laminate achieving both of excellent elongation and an excellent breaking strength, and a method of manufacturing the laminate.

### Solution to Problem

According to one aspect of the present invention, there is provided a stretchable laminate, including: a non-woven fabric layer; and an elastomer layer, wherein the non-woven fabric layer is a long-fiber hydroentangled non-woven fabric, wherein the elastomer layer is in the form of a film, wherein the non-woven fabric layer and the elastomer layer are bonded to each other, wherein the elastomer layer includes an intermediate layer and surface layers arranged on both sides of the intermediate layer, and wherein the intermediate layer contains a styrene-based elastomer.

In one embodiment, the long-fiber hydroentangled non-woven fabric has a basis weight of 25 gsm or less.

In one embodiment, the long-fiber hydroentangled non-woven fabric has an elongation at 5 N of 50% or more.

In one embodiment, the long-fiber hydroentangled non-woven fabric has a breaking strength of 10 N or more.

In one embodiment, the long-fiber hydroentangled non-woven fabric has a breaking strength of 15 N or more.

In one embodiment, the long-fiber hydroentangled non-woven fabric is an activated non-woven fabric.

In one embodiment, the long-fiber hydroentangled non-woven fabric is a non-woven fabric shrunk in a first direction.

In one embodiment, the elastomer layer has a thickness of from 20 µm to 200 µm.

In one embodiment, the surface layers each contain an olefin-based elastomer.

In one embodiment, the elastomer layer is an activated elastomer layer.

In one embodiment, the non-woven fabric layer and the elastomer layer are bonded to each other by ultrasonic welding.

According to another aspect of the present invention, there is provided an article. The article includes the above-mentioned stretchable laminate.

According to still another aspect of the present invention, there is provided a method of manufacturing a stretchable laminate. The manufacturing method is a method of manufacturing the above-mentioned stretchable laminate including a non-woven fabric layer and an elastomer layer, the method including: activating a long-fiber hydroentangled non-woven fabric; and bonding the activated non-woven fabric and the elastomer layer to each other by at least one kind of bonding method selected from the group consisting of ultrasonic welding and bonding via a pressure-sensitive adhesive layer.

In one embodiment, the activating the long-fiber hydroentangled non-woven fabric, and the bonding the activated non-woven fabric and the elastomer layer to each other are continuously performed inline.

In one embodiment, the manufacturing method further includes activating the non-woven fabric and the elastomer layer bonded to each other.

In one embodiment, the manufacturing method further includes shrinking the long-fiber hydroentangled non-woven fabric in a first direction.

### Advantageous Effects of Invention

According to the present invention, there is obtained the stretchable laminate achieving both of excellent elongation and an excellent breaking strength. The stretchable laminate of the present invention includes the non-woven fabric layer and the elastomer layer. The non-woven fabric layer is the long-fiber hydroentangled non-woven fabric. The use of the long-fiber hydroentangled non-woven fabric as the non-woven fabric layer can achieve both of excellent elongation and an excellent breaking strength. Further, the long-fiber hydroentangled non-woven fabric can be manufactured at low cost. Accordingly, the stretchable laminate excellent in elongation and breaking strength can be manufactured at low cost. In addition, the appearance failure of the laminate due to a hole or the like can be prevented.

### Brief Description of Drawings

FIG. **1** is a schematic sectional view of a stretchable laminate according to one embodiment of the present invention.
FIG. **2** is a schematic sectional view of a stretchable laminate according to another embodiment of the present invention.
FIG. **3A** is a schematic perspective view of ring rolls to be used in one embodiment of the present invention.
FIG. **3B** is a schematic enlarged view of the engaging portion of the ring rolls illustrated in FIG. **3A****.**

### Description of Embodiments

### A. Outline of Stretchable Laminate

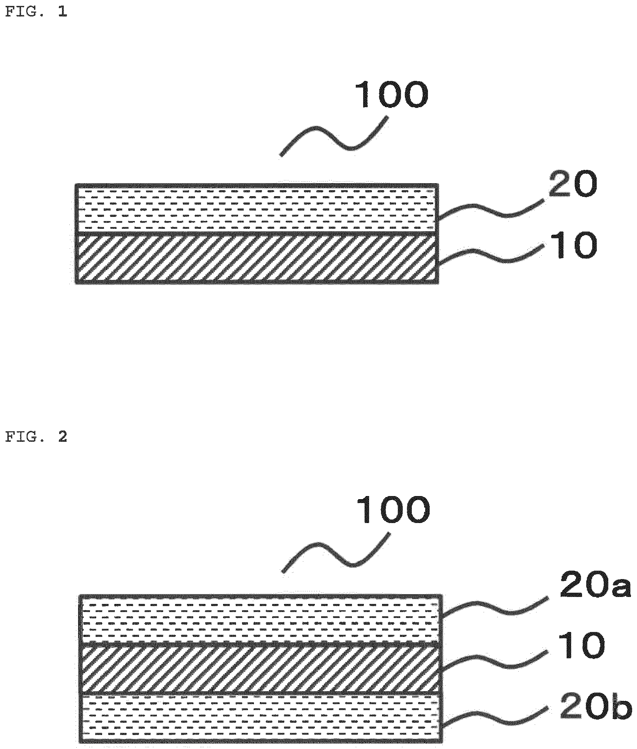

A stretchable laminate of the present invention includes a non-woven fabric layer and an elastomer layer. The non-woven fabric layer is a long-fiber hydroentangled non-woven fabric . FIG. 1 is a schematic sectional view of a stretchable laminate according to one embodiment of the present invention. In the illustrated example, a stretchable laminate **100** includes a non-woven fabric layer **20** and an elastomer layer **10.** In this embodiment, the stretchable laminate **100** includes the non-woven fabric layer **20** only on one surface of the elastomer layer **10.**

FIG. 2 is a schematic sectional view of a stretchable laminate according to another embodiment of the present invention. In the illustrated example, a stretchable laminate **100** includes an elastomer layer **10** and non-woven fabric layers **20a** and **20b.** In this embodiment, the stretchable laminate **100** includes the non-woven fabric layers **20a** and **20b** on both surfaces of the elastomer layer **10.** The non-woven fabric layers **20a** and **20b** may be layers formed of the same non-woven fabric, or may be layers formed of different non-woven fabrics. In addition, the laminate may further include any appropriate other layer except the non-woven fabric layers and the elastomer layer described above.

In one embodiment, the stretchable laminate may have a through-hole. The presence of the through-hole exhibits more excellent air permeability. The stretchable laminate having the through-hole is disclosed in, for example, JP 2016-203618 A. The contents of the disclosure are incorporated herein by reference.

The thickness of the stretchable laminate may be set to any appropriate value. The thickness of the stretchable laminate is preferably 0.1 mm or more, more preferably 0.15 mm or more, still more preferably 0.2 mm or more. In addition, the thickness of the stretchable laminate is preferably 1.0 mm or less, more preferably 0.8 mm or less, still more preferably 0.6 mm or less, particularly preferably 0.5 mm or less, most preferably 0.45 mm or less. When the thickness falls within the ranges, the laminate can be easily used as a material used in articles such as sanitary articles, for example, a diaper and a mask.

### B. Non-woven Fabric Layer

The long-fiber hydroentangled non-woven fabric is used as the non-woven fabric layer. The use of the long-fiber hydroentangled non-woven fabric provides a stretchable laminate achieving both of excellent elongation and an excellent breaking strength. Non-woven fabrics can be generally classified by a method of forming a web and a method of fixing the web. Herein, the long-fiber hydroentangled non-woven fabric refers to a non-woven fabric formed through the fixation of a web manufactured from fibers formed by a spun-laid method by a hydroentangling method. The long-fiber hydroentangled non-woven fabric is excellent in breaking strength. Accordingly, the breaking strength of the stretchable laminate can be improved. Further, the elongation thereof can also be improved by activation treatment to be described later. The use of such non-woven fabric as the non-woven fabric layer can cause the stretchable laminate to be obtained to achieve both of excellent elongation and an excellent breaking strength.

As described above, the long-fiber hydroentangled non-woven fabric is manufactured by a manufacturing method including: manufacturing a web by the spun-laid method; and jetting a water flow to the web to entangle fibers in the web with each other (fixation by the hydroentangling method) . The web to be used in the long-fiber hydroentangled non-woven fabric may be formed by any appropriate method. The web may be formed by, for example, spinning (melt spinning) including: melting a resin serving as a raw material for the fibers to fluidize the resin; blowing the resin out of any appropriate spinning nozzle; and cooling the resin to solidify the resin. In addition, the web may be spun by ejecting the dissolved resin from the spinning nozzle into a solvent and removing g the solvent (wet spinning) . A facility to be used for a non-woven fabric manufactured by using the spun-laid method (e.g., a spun-bonded non-woven fabric) may be used in the formation.

Next, the long-fiber hydroentangled non-woven fabric can be formed by entangling the fibers in the web manufactured from the fibers formed by the spun-laid method with each other with the water jet. Specifically, the long-fiber hydroentangled non-woven fabric can be obtained by jetting a high-pressure water flow jet to the web to entangle the fibers with each other. The jetting with the high-pressure water flow jet may be performed with one high-pressure water flow jet, or may be performed with a combination of two or more high-pressure water flow jets. When the two or more high-pressure water flow jets are used, the jets may be jetted under the same conditions, or may be jetted under different conditions. In addition, the high-pressure water flow jet may be jetted at any appropriate angle with respect to the web. For example, the high-pressure water flow jet may be jetted from a direction perpendicular to the conveying direction of the web, or may be jetted from an oblique direction (e.g. , 45° with respect to the conveying direction) . When the two or more high-pressure water flow jets are used, the jets may be jetted from the same angle, or may be jetted from different angles. Further, the jets may be jetted to both the surfaces of the web, or may be jetted only to one surface thereof.

Any appropriate fibers are used as the fibers for forming the non-woven fabric layer. Examples thereof include fibers of polypropylene, polyethylene, polyester, polyamide, polyurethane, an elastomer, rayon, cellulose, acrylic, a copolymer thereof, or a blend thereof, or a mixture thereof, or any other polyolefin. The non-woven fabric preferably contains fibers of polyolefin, such as polypropylene or polyethylene, out of those fibers because the effects of the present invention can be expressed to a larger extent.

The non-woven fabric for forming the non-woven fabric layer may contain fibers as a homogeneous structural body, or may contain a bicomponent structural body, such as a sheath/core structure, a side-by-side structure, a sea-island structure, and any other bicomponent structure. Detailed descriptions of the non-woven fabric may be found in, for example, "Nonwoven Fabric Primer and Reference Sampler," E.A. Vaughn, Association of the Nonwoven Fabrics Industry, third edition (1992).

The fibers for forming the non-woven fabric may each contain any appropriate other component as long as the effects of the present invention are not impaired. Examples of such other component include any other polymer, a tackifier, a plasticizer, an antidegradant, a pigment, a dye, an antioxidant, an antistatic agent, a lubricant, a blowing agent, a heat stabilizer, a light stabilizer, an inorganic filler, and an organic filler. The number of kinds of those components may be only one, or two or more. The content of the other component is preferably 10 wt% or less, more preferably 7 wt% or less, still more preferably 5 wt% or less, particularly preferably 2 wt% or less, most preferably 1 wt% or less.

The basis weight of the long-fiber hydroentangled non-woven fabric is preferably 25 gsm (g/m²) or less, more preferably 23 gsm or less, still more preferably 20 gsm or less. In addition, the basis weight of the long-fiber hydroentangled non-woven fabric is preferably 13 gsm or more. The basis weight of the non-woven fabric may be measured by any appropriate method. The measurement may be performed by, for example, the following method. The basis weight of the non-woven fabric may be measured by: measuring the weight of a sample obtained by cutting the non-woven fabric into an area of 100 cm² with an electronic balance; and converting the measured value into the unit of g/m² (gsm) . In addition, the basis weight of the non-woven fabric in a stretchable laminate in which the non-woven fabric layer and the elastomer layer are directly laminated may be calculated by subtracting the basis weight of the elastomer layer, which is estimated from the observation of a section thereof with an electron microscope, from the basis weight of the stretchable laminate measured by the same method as the method of measuring the basis weight of the non-woven fabric. In the case of a stretchable laminate including the non-woven fabrics on both of its surfaces, the basis weight of each of the non-woven fabrics may be calculated by further dividing the result of the subtraction on the basis of the thickness ratio of each of the non-woven fabrics. Further, in the case of a stretchable laminate in which the non-woven fabric layer and the elastomer layer are laminated via a pressure-sensitive adhesive, the measurement may be performed by: separating the non-woven fabric layer and the elastomer layer from each other with a solvent; removing the pressure-sensitive adhesive from the non-woven fabric layer; and then applying the method of measuring the basis weight of the non-woven fabric to the resultant non-woven fabric . In a non-woven fabric shrunk in a first direction, its fibers may become denser to increase its basis weight. In the non-woven fabric shrunk in the first direction, the basis weight of the non-woven fabric before the shrinkage only needs to fall within the ranges.

In one embodiment, the basis weight of the non-woven fabric shrunk in the first direction is preferably 40 gsm or less, more preferably 35 gsm or less, still more preferably 30 gsm or less, most preferably 25 gsm or less. In addition, the basis weight of the non-woven fabric shrunk in the first direction is preferably 10 gsm or more, more preferably 13 gsm or more, still more preferably 15 gsm or more.

The long-fiber hydroentangled non-woven fabric preferably has an elongation at 5 N of 50% or more and a breaking strength of 10 N or more. The elongation of the long-fiber hydroentangled non-woven fabric at 5 N is more preferably 100% or more, still more preferably 120% or more. In addition, the breaking strength of the long-fiber hydroentangled non-woven fabric is more preferably 15 N or more, still more preferably 20 N or more. When the elongation at 5 N and the breaking strength fall within the ranges, a stretchable laminate having excellent elongation and an excellent breaking strength is obtained.

The long-fiber hydroentangled non-woven fabric is preferably activated (subjected to preactivation treatment) . When the non-woven fabric is activated, the elongation of the non-woven fabric is further improved. In addition, the activation can improve the elongation of a non-woven fabric whose elongation is susceptible to improvement (that is hardly elongated) . In addition, the use of the non-woven fabric that is hardly elongated can provide a non-woven fabric layer having an activated portion that is easily elongated and an inactivated portion that is hardly elongated. The presence of the inactivated portion that is hardly elongated can improve a holding force when the stretchable laminate is bonded to any other member by being stretched. When the stretchable laminate of the present invention includes the non-woven fabric layers on both the sides of the elastomer layer, an activated non-woven fabric may be used for each of both the surfaces thereof, or the activated non-woven fabric may be used only for one of the surfaces.

The activation treatment may be performed by any appropriate method. The activation treatment may be performed by, for example, treatment including stretching the long-fiber hydroentangled non-woven fabric in its widthwise direction and treatment including mechanically breaking the fiber structure of some region of the non-woven fabric . When the activation treatment is performed, the non-woven fabric can be elongated with a smaller force. The activation treatment may be performed on part of the non-woven fabric, or may be performed on the entirety thereof. In addition, the activation treatment may be performed a plurality of times. When the activation treatment is performed a plurality of times, one and the same activation treatment may be performed, or different kinds of activation treatment may be performed in combination.

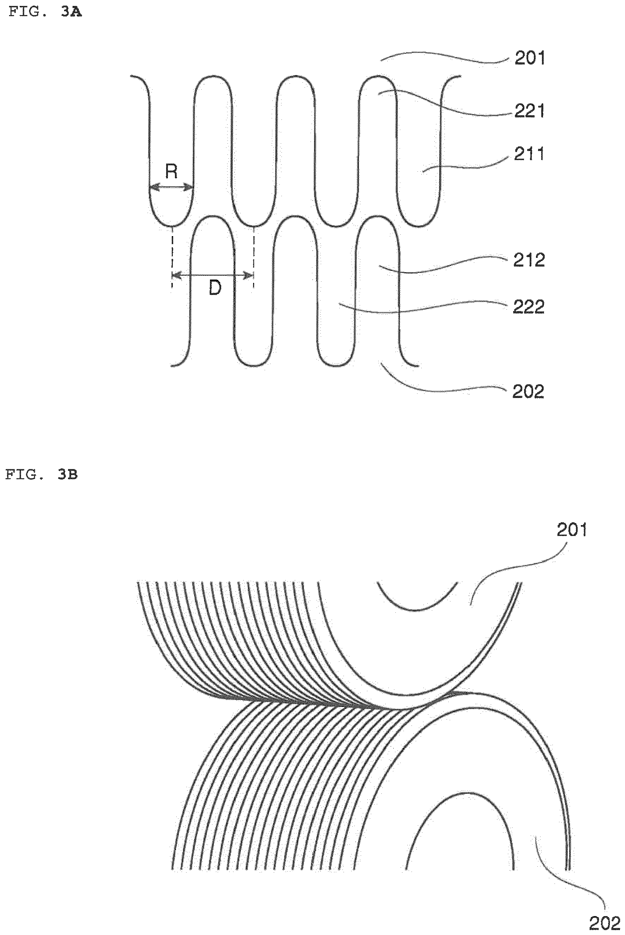

The activation by the mechanical breaking treatment may be performed by, for example, conveying the long-fiber hydroentangled non-woven fabric while sandwiching the non-woven fabric between two rolls (e.g. , ring rolls) each having unevenness. FIG. **3A** is a schematic perspective view of ring rolls to be used in one embodiment of the present invention, and FIG. **3B** is a schematic enlarged view of the engaging portion of the ring rolls illustrated in FIG. **3A****.** The non-woven fabric is conveyed between a first ring roll **201** and a second ring roll **202** to be subjected to the activation treatment. The first ring roll **201** includes a plurality of protruding portions **211** and a plurality of groove portions **221.** Similarly, the second ring roll **202** includes a plurality of protruding portions **212** and a plurality of groove portions **222.** The ring rolls are arranged so that the protruding portions **211** of the first ring roll and the groove portions **222** of the second ring roll may engage with each other, and the protruding portions **212** of the second ring roll and the groove portions **221** of the first ring roll may engage with each other. Both the surfaces of the non-woven fabric are subjected to the activation treatment by the protruding portions **211** and **212** to any appropriate depths during the conveyance between the first ring roll **201** and the second ring roll **202.** In the ring rolls, the tip radius (**R** in FIG. **3B**) of each of the protruding portions and a pitch width (**D** in FIG. **3B**) between the adjacent protruding portions are set to any appropriate values. For example, ring rolls each having a tip radius **R** of 1 mm and a pitch width **D** of 7 mm may be used in combination. When the rolls are brought into contact with the long-fiber hydroentangled non-woven fabric, the rolls are each preferably brought into contact therewith to any appropriate depth. The depth at the time of the contact may be set in accordance with, for example, the kinds and basis weight of the fibers for forming the long-fiber hydroentangled non-woven fabric so that the non-woven fabric may have a preferred elongation (e.g., an elongation at 5 N of 50% or more) . The depth when both the surfaces are each most deeply treated is preferably from 2 mm to 12 mm, more preferably from 4 mm to 10 mm, still more preferably from 6 mm to 8 mm.

In one embodiment, the long-fiber hydroentangled non-woven fabric is a non-woven fabric shrunk in the first direction. In the non-woven fabric shrunk in the first direction, the fibers for forming the non-woven fabric may become denser as a result of the shrinkage. At the time of the use of the laminate, the extension of the non-woven fabric (consequently, the stretchable laminate) starts from a portion where the fibers have become denser. Accordingly, a stretchable laminate that can be more easily extended, and is hence excellent in stretchability can be obtained. Herein, the first direction refers to any appropriate one direction selected on the flat surface of the non-woven fabric. In one embodiment, the first direction is the CD direction (widthwise direction) of the non-woven fabric. In one embodiment, the first direction refers to the same direction as the direction in which a product in which the stretchable laminate is used is stretched at the time of its use. The shrinkage in the first direction can improve the stretchability of the long-fiber hydroentangled non-woven fabric in the first direction.

The shrinkage in the first direction is performed so that any appropriate shrinkage ratio may be obtained. For example, the shrinkage ratio of the long-fiber hydroentangled non-woven fabric in the first direction is, for example, 20% or more, preferably 30% or more, more preferably 40% or more, most preferably 50% or more. When the shrinkage ratio falls within the ranges, a stretchable laminate having a more excellent elongation can be obtained. In addition, the shrinkage ratio is, for example, 100% or less, preferably 80% or less, more preferably 60% or less. Herein, the shrinkage ratio refers to a value calculated from the ratio of the length of the shrunk non-woven fabric in the first direction (e.g. , the widthwise direction) to the length of a raw (i.e. , before the shrinkage) non-woven fabric in the first direction (length of non-woven fabric after shrinkage in first direction/length of raw non-woven fabric in first direction×100).

When the long-fiber hydroentangled non-woven fabric and any other non-woven fabric are used in combination, any appropriate non-woven fabric may be used as the other non-woven fabric. A non-woven fabric excellent in flexibility is preferably used. Specific examples thereof include a carded non-woven fabric, a spunlace non-woven fabric, an air-through non-woven fabric, a meltblown non-woven fabric, a spunbonded non-woven fabric, and a spunmelt non-woven fabric. Those non-woven fabrics may be used as they are, or may be subjected to the above-mentioned activation treatment and/or shrinking treatment in the first direction.

### C. Elastomer Layer

The elastomer layer includes an intermediate layer and surface layers arranged on both sides of the intermediate layer, wherein the intermediate layer contains a styrene-based elastomer. The elastomer layer is formed by using any appropriate elastomer resin. Examples of the elastomer resin serving as a main component of the elastomer layer include an olefin-based elastomer, a styrene-based elastomer, a vinyl chloride-based elastomer, a urethane-based elastomer, an ester-based elastomer, and an amide-based elastomer. Of those, an olefin-based elastomer or a styrene-based elastomer is preferably used.

The use of the olefin-based elastomer can suppress heat decomposition at the time of the formation of the resin into a film. In addition, the storage stability of the resin is improved, and hence fluctuations in physical property values thereof during its storage can be suppressed. Examples of the olefin-based elastomer include an olefin block copolymer, an olefin random copolymer, an ethylene copolymer, a propylene copolymer, an ethylene olefin block copolymer, a propylene olefin block copolymer, an ethylene olefin random copolymer, a propylene olefin random copolymer, an ethylene propylene random copolymer, an ethylene (1-butene) random copolymer, an ethylene (1-pentene) olefin block copolymer, an ethylene (1-hexene) random copolymer, an ethylene (1-heptene) olefin block copolymer, an ethylene (1-octene) olefin block copolymer, an ethylene (1-nonene) olefin block copolymer, an ethylene (1-decene) olefin block copolymer, a propylene ethylene olefin block copolymer, an ethylene (a-olefin) copolymer, an ethylene (a-olefin) random copolymer, an ethylene (a-olefin) block copolymer, amorphous polypropylene, combinations of the above-mentioned polymers and polyethylene (LLDPE, LDPE, HDPE, or the like), combinations of the above-mentioned polymers and polypropylene, and combinations thereof. Those olefin-based elastomers may be used alone or in combination thereof.

The density of the olefin-based elastomer is preferably 0.830 g/cm³ or more, more preferably 0.835 g/cm³ or more, still more preferably 0.840 g/cm³ or more, most preferably 0.845 g/cm³ or more. In addition, the density of the olefin-based elastomer is preferably 0.890 g/cm³ or less, more preferably 0.888 g/cm³ or less, still more preferably 0.886 g/cm³ or less, particularly preferably 0.885 g/cm³ or less. When the density falls within the ranges, a stretchable laminate having more excellent fittability can be provided. Further, the heat stability and storage stability of the laminate can be improved. In addition, a process in the manufacture of the elastomer layer can be further simplified, and hence processing cost therefor can be further suppressed.

The melt flow rate (MFR) of the olefin-based elastomer at 230°C and 2.16 kgf is preferably 1.0 g/10 min or more, more preferably 2.0 g/10 min or more. In addition, the MFR of the olefin-based elastomer at 230°C and 2.16 kgf is preferably 25.0 g/10 min or less, more preferably 23.0 g/10 min or less, still more preferably 21.0 g/10 min or less, particularly preferably 20.0 g/10 min or less, most preferably 19.0 g/10 min or less. When the MFR falls within the ranges, a stretchable laminate having more excellent fittability can be provided. Further, the heat stability and storage stability of the laminate can be improved. In addition, a process in the manufacture of the elastomer layer can be further simplified, and hence processing cost therefor can be further suppressed.

An α-olefin-based elastomer is preferably used as the olefin-based elastomer. Of the α-olefin-based elastomers, at least one kind selected from an ethylene-based elastomer, a propylene-based elastomer, and a 1-butene-based elastomer is more preferably used. When such α-olefin-based elastomer is adopted as the olefin-based elastomer, a stretchable laminate having more excellent fittability can be provided. Further, the heat stability and storage stability of the laminate can be improved. In addition, a process in the manufacture of the elastomer layer can be further simplified, and hence processing cost therefor can be further suppressed.

A commercially available product may also be used as the α-olefin-based elastomer. Examples of the commercially available product include "Tafmer" (trademark) series (e.g., Tafmer PN-2070 and Tafmer PN-3560) manufactured by Mitsui Chemicals, Inc., and "Vistamaxx" (trademark) series (e.g. , Vistamaxx 3000, Vistamaxx 6202, and Vistamaxx 7010) manufactured by Exxon Mobil Corporation.

The α-olefin-based elastomer is preferably produced by using a metallocene catalyst. When the α-olefin-based elastomer produced by using a metallocene catalyst is adopted, a stretchable laminate having extremely excellent fittability can be provided. Further, the heat stability and storage stability of the laminate can be improved. In addition, a process in the manufacture of the elastomer layer can be further simplified, and hence processing cost therefor can be further suppressed.

Examples of the styrene-based elastomer include a SIS-based elastomer and a SBS-based elastomer. In addition, a SIS-based elastomer having a specific molecular structure may be used as the styrene-based elastomer. A specific example of the SIS-based elastomer is a SIS-based elastomer including a styrene-isoprene-styrene block copolymer molecular structure having different terminal styrene block chain lengths (hereinafter sometimes referred to as "specific SIS-based elastomer") . The use of such SIS-based elastomer provides a stretchable laminate that is excellent in holding force when bonded to any other member by being stretched, and is more excellent in touch. The specific SIS-based elastomers may be used alone or in combination thereof.

Examples of the specific SIS-based elastomer include products available under the product names "Quintac 3390 (SL-159)" (styrene content=48 wt%) and "Quintac 3620" (styrene content=14 wt%) from Zeon Corporation.

The MFR of the specific SIS-based elastomer at 200°C and 5 kgf is preferably 5.0 g/10 min or more, more preferably 6.0 g/10 min or more, still more preferably 8.0 g/10 min or more. In addition, the MFR of the specific SIS-based elastomer is preferably 25.0 g/10 min or less, more preferably 23.0 g/10 min or less, still more preferably 21.0 g/10 min or less, particularly preferably 20.0 g/10 min or less, most preferably 18.0 g/10 min or less. When the MFR falls within the ranges, there is obtained a stretchable laminate that is further improved in holding force when bonded to any other member by being stretched, and is more excellent in touch. In addition, a manufacturing process for the elastomer layer can be further simplified, and hence processing cost therefor can be further suppressed.

The content of the elastomer resin serving as the main component in the elastomer layer is preferably 50 wt% or more, more preferably 70 wt% or more, still more preferably 90 wt% or more. In addition, the content of the elastomer resin serving as the main component is preferably 100 wt% or less, more preferably 95 wt% or less. When the content of the elastomer resin serving as the main component falls within the ranges, the elastomer layer can express a sufficient elastomeric characteristic.

The elastomer layer may contain any appropriate other component as long as the effects of the present invention are not impaired. Examples of such other component include any other polymer, a tackifier, a plasticizer, an antidegradant, a pigment, a dye, an antioxidant, an antistatic agent, a lubricant, a blowing agent, a heat stabilizer, a light stabilizer, an inorganic filler, and an organic filler. The number of kinds of those components may be only one, or two or more. The content of the other component in the elastomer layer is preferably 10 wt% or less, more preferably 7 wt% or less, still more preferably 5 wt% or less, particularly preferably 2 wt% or less, most preferably 1 wt% or less.

The thickness of the elastomer layer is preferably 20 µm or more, more preferably 30 µm or more. In addition, the thickness of the elastomer layer is preferably 200 µm or less, more preferably 160 um or less, still more preferably 140 µm or less, particularly preferably 120 um or less, most preferably 100 µm or less. When the thickness of the elastomer layer falls within such ranges, a stretchable laminate having more excellent fittability can be provided.

The elastomer layer includes an intermediate layer and surface layers arranged on both the sides of the intermediate layer. The intermediate layer and the surface layers may each be formed by using any appropriate elastomer, provided that the intermediate layer contains a styrene-based elastomer. Specifically, the above-mentioned elastomers may each be used. The olefin-based elastomer is preferably used in each of the surface layers. The use of the olefin-based elastomer can improve the adhesive property of each of the surface layers with any other layer (e.g., the non-woven fabric layer). In addition, the intermediate layer preferably contains a white pigment. The incorporation of the white pigment provides appearance performance suitable for a sanitary article.

The thickness of each of the intermediate layer and the surface layers may be set to any appropriate value so that the thickness of the elastomer layer may fall within the above-mentioned ranges. The thickness of the intermediate layer is preferably 18 µm or more, more preferably 28 µm or more. In addition, the thickness of the intermediate layer is preferably 94 µm or less, more preferably 56 um or less, still more preferably 46 µm or less. The thickness of each of the surface layers is preferably 1 µm or more. In addition, the thickness of each of the surface layers is preferably 4 µm or less, more preferably 3 µm or less, still more preferably 2 µm or less. The thicknesses of the surface layers arranged on both the sides of the intermediate layer may be preferably set to the same thickness.

In one embodiment, an activated elastomer layer is used as the elastomer layer. The use of the activated elastomer layer can provide a stretchable laminate achieving both of a more excellent breaking strength and more excellent elongation. The elastomer layer may be activated by any appropriate method. For example, the layer may be activated by using the same method as the method of activating the non-woven fabric described above.

### D. Method of manufacturing Stretchable Laminate

The above-mentioned stretchable laminate may be manufactured by any appropriate method. Examples thereof include (1) a method including laminating the elastomer layer formed by extrusion from the T-die of an extruder and the non-woven fabric layer separately drawn from a roll body (not according to the present invention), (2) a method including simultaneously extruding and laminating the elastomer layer and the non-woven fabric layer (not according to the present invention) , (3) a method including bonding the elastomer layer and the non-woven fabric layer, which have been prepared separately from each other, to each other with an adhesive, and (4) the bonding of the elastomer layer and the non-woven fabric layer to each other by heat lamination or an ultrasonic wave. Examples of a method for the bonding according to the present invention are bonding with an ultrasonic wave (ultrasonic fusion bonding) and bonding with a pressure-sensitive adhesive. A method of manufacturing the stretchable laminate of the present invention includes, for example, subjecting the long-fiber hydroentangled non-woven fabric to activation treatment, and bonding the long-fiber hydroentangled non-woven fabric subjected to the activation treatment and the elastomer layer to each other. A manufacturing process for the stretchable laminate may be performed continuously with the manufacturing process for the long-fiber hydroentangled non-woven fabric described above, or the respective processes may be sequentially performed.

### D-1. Ultrasonic Bonding

The ultrasonic bonding may be performed by any appropriate method. The non-woven fabric layer and the elastomer layer can be more strongly bonded to each other by being fused and bonded to each other through the ultrasonic bonding. Further, the occurrence of a unique odor derived from an adhesive and a pressure-sensitive adhesive is further suppressed, and the inhibition of the air permeability of the stretchable laminate by the adhesive and the pressure-sensitive adhesive can be further prevented. In addition, the stretchable laminate can be manufactured at lower cost.

The ultrasonic fusion bonding is specifically performed by arranging members to be bonded (e.g., a laminate of the elastomer layer and the non-woven fabric layer) between a part for feeding vibration energy through use of an ultrasonic wave (part generally referred to as "horn") and a roll-shaped part (generally referred to as "anvil") . The horn is typically arranged vertically above the members to be bonded and the anvil. The horn typically vibrates at from 20, 000 Hz to 40, 000 Hz to transfer energy typically in the form of frictional heat to the members to be bonded under pressure. Part of at least one of the members to be bonded is softened or melted by the frictional heat and the pressure, and hence the layers are bonded to each other.

A pressing force between the horn and the anvil in ultrasonic welding is preferably from 100 N to 1,500 N, more preferably from 300 N to 1,300 N, still more preferably from 500 N to 1,100 N, particularly preferably from 700 N to 1,000 N. When the pressing force between the horn and the anvil in the ultrasonic welding falls within the ranges, the flexibility of the stretchable laminate is further improved, and a more satisfactory touch feeling thereof can be achieved. In addition, the production rate of the stretchable laminate can be further improved.

In one embodiment, the ultrasonic fusion bonding is performed by a method generally known as "continuous ultrasonic fusion bonding." The continuous ultrasonic fusion bonding is typically used for sealing members to be bonded that can be supplied into a bonding apparatus in a substantially continuous manner. In the continuous ultrasonic fusion bonding, the horn is typically fixed and the members to be bonded move directly below the horn. In one kind of continuous ultrasonic fusion bonding, the fixed horn and a rotating anvil surface are used. During the continuous ultrasonic fusion bonding, the members to be bonded are pulled between the horn and the rotating anvil. The horn typically extends in its lengthwise direction toward the members to be bonded, and its vibration moves along the horn in its axial direction to the materials.

In another embodiment, the horn is a rotation type, has a cylindrical shape, and rotates about its lengthwise direction axis. Input vibration is present in the axial direction of the horn and output vibration is present in the radial direction of the horn. The horn is arranged so as to be close to the anvil, and the anvil can also typically rotate so that the members to be bonded may pass a space between cylindrical surfaces at a line velocity substantially equal to the tangential velocity of the cylindrical surfaces.

The ultrasonic fusion bonding is described in, for example, JP 2008-526552 A, JP 2010-195044 A, JP 2013-231249 A, JP 2015-16294 A, and US 5976316 A

The ultrasonic bonding may be performed on the entirety of the non-woven fabric layer and the elastomer layer, or may be performed on part of the layers. When the ultrasonic bonding is performed, the ratio of the area of a welded portion welded by the ultrasonic welding to the area of the entirety of the surface of the stretchable laminate to be obtained (hereinafter sometimes referred to as "welding area ratio") is preferably 2% or more, more preferably 3% or more, still more preferably 4% or more, particularly preferably 5% or more. In addition, the welding area ratio is preferably 20% or less, more preferably 15% or less, still more preferably 10% or less, particularly preferably 8% or less. When the welding area ratio falls within the ranges, both of the productivity and adhesive strength of the stretchable laminate can be achieved.

In one embodiment, the above-mentioned rotating anvil surface preferably has an embossed pattern. Specific examples of such embossed pattern include a continuous lattice shape, a discontinuous lattice shape, a continuous curve shape, a discontinuous curve shape, a continuous zigzag shape, a discontinuous zigzag shape, a continuous linear shape, a discontinuous linear shape, a circular shape (dot shape), an elliptical shape, a hollow circular shape, a hollow elliptical shape, an arc shape, and a hollow arc shape. The embossed pattern of the rotating anvil surface is disclosed in, for example, JP 2017-65253 A. The contents of the disclosure are incorporated herein by reference.

The shape of the tip portion (portion to be brought into contact with the members to be bonded) of a convex portion for forming the embossed pattern may be set to any appropriate shape, and is, for example, a circular shape. When an embossed pattern having a circular tip portion is used, the diameter of the circular portion is preferably 0.4 mm or more, more preferably 0.45 mm or more, still more preferably 0.5 mm or more. In addition, the diameter of the circular portion is preferably 1 mm or less, more preferably 0.9 mm or less, still more preferably 0.8 mm or less. When the diameter falls within the ranges, both of the productivity and adhesive strength of the stretchable laminate can be achieved. The embossed depth of the pattern is preferably 0.5 mm or more. In addition, the embossed depth is preferably 1.5 mm or less, more preferably 1 mm or less. When the embossed depth falls within the ranges, both of the productivity and adhesive strength of the stretchable laminate can be achieved.

In addition, from the viewpoint of stabilizing the quality of the stretchable laminate to be obtained, the ultrasonic fusion bonding is preferably performed while the temperature of the anvil is controlled so as to be any appropriate temperature. When variation in temperature of the anvil is excessively large, there is a problem in that variation in adhesive strength also occurs to make it impossible to obtain a stretchable laminate having stable quality. The temperature of the anvil may be set to, for example, from 5°C to 90°C in terms of absolute temperature, and temperature control is performed so that the temperature of the anvil may be the preset temperature±5°C. When the temperature of the anvil falls within the ranges, a reduction in productivity due to condensation or the like is prevented, and adverse effects on product characteristics, such as the curing of the non-woven fabric and the elastomer layer, can be prevented.

### D-2. Bonding with Pressure-sensitive Adhesive

In another embodiment of the present invention, the non-woven fabric layer and the elastomer layer are bonded to each other via any appropriate pressure-sensitive adhesive. A hot-melt pressure-sensitive adhesive is preferably used. The use of the hot-melt pressure-sensitive adhesive reduces the need for the addition of a tackifier as a component for the elastomer layer. Thus, for example, the extrusion stability of the layers is improved, and hence a problem in that the tackifier adheres to a forming roll can be suppressed. In addition, a problem in that a manufacturing line is contaminated by, for example, volatile matter derived from the tackifier can be suppressed.

The hot-melt pressure-sensitive adhesive may be applied to the entire surface of the non-woven fabric layer, or may be applied to part of the non-woven fabric layer. When the hot-melt pressure-sensitive adhesive is applied to a part on the non-woven fabric layer, the hot-melt pressure-sensitive adhesive is preferably applied so as to include at least the end portions of the non-woven fabric layer.

Any appropriate pressure-sensitive adhesive may be used as the hot-melt pressure-sensitive adhesive. Examples thereof include a hot-melt pressure-sensitive adhesive containing a styrene-based elastomer, and a hot-melt pressure-sensitive adhesive containing an olefin-based polymer. Of those, a hot-melt pressure-sensitive adhesive containing a styrene-based polymer is preferred. Examples of such styrene-based polymer include a polymer including a SIS structure, a polymer including a SBS structure, hydrogenated products thereof, and blends thereof. The hot-melt pressure-sensitive adhesives may be used alone or in combination thereof. In addition, when the hot-melt pressure-sensitive adhesive contains the styrene-based polymer, the number of kinds of the styrene-based polymers may be only one, or two or more.

When the hot-melt pressure-sensitive adhesive contains the styrene-based polymer, the content of the styrene-based polymer in the hot-melt pressure-sensitive adhesive is preferably from 10 wt% to 90 wt%, more preferably from 20 wt% to 80 wt%, still more preferably from 30 wt% to 70 wt%, particularly preferably from 40 wt% to 60 wt%.

The hot-melt pressure-sensitive adhesive may further contain any appropriate other component. Examples of such other component include liquid paraffin, a tackifier, an antioxidant, a UV absorber, a light stabilizer, and a fluorescent agent. The number of kinds of such other components may be only one, or two or more.

The tackifier is effective in improving the pressure-sensitive adhesive strength of the pressure-sensitive adhesive. The content of the tackifier in the hot-melt pressure-sensitive adhesive is preferably from 10 wt% to 90 wt%, more preferably from 20 wt% to 80 wt%, still more preferably from 30 wt% to 70 wt%, particularly preferably from 40 wt% to 60 wt%.

Examples of the tackifier include a hydrocarbon-based tackifier, a terpene-based tackifier, a rosin-based tackifier, a phenol-based tackifier, an epoxy-based tackifier, a polyamide-based tackifier, an elastomer-based tackifier, and a ketone-based tackifier. The number of kinds of the tackifiers may be only one, or two or more.

Examples of the hydrocarbon-based tackifier include an aliphatic hydrocarbon resin, an aromatic hydrocarbon resin (e.g., a xylene resin), an alicyclic hydrocarbon resin, an aliphatic and aromatic petroleum resin (e.g. , a styrene-olefin-based copolymer), an aliphatic and alicyclic petroleum resin, a hydrogenated hydrocarbon resin, a coumarone-based resin, and a coumarone-indene-based resin.

Examples of the terpene-based tackifier include: terpene-based resins, such as an α-pinene polymer and a β-pinene polymer; and modified terpene-based resins each obtained by modifying (e.g., phenol modifying, aromatic modifying, or hydrogenation modifying) a terpene-based resin (e.g., a terpene-phenol-based resin, a styrene-modified terpene-based resin, and a hydrogenated terpene-based resin).

Examples of the rosin-based tackifier include: unmodified rosins (raw rosins), such as a gum rosin and a wood rosin; modified rosins each obtained by modifying an unmodified rosin through, for example, hydrogenation, disproportionation, or polymerization (e.g., a hydrogenated rosin, a disproportionated rosin, a polymerized rosin, and any other chemically modified rosin); and other various rosin derivatives.

Examples of the phenol-based tackifier include resol-type or novolac-type alkylphenols.

In addition, the tackifier may be a product commercially available as a blend with an olefin resin or a thermoplastic elastomer.

The hot-melt pressure-sensitive adhesive may be applied to the non-woven fabric layer and/or the elastomer layer by any appropriate method.

In addition, the stretchable laminate may be further subjected to stretching treatment and activation treatment after the lamination. Specifically, stretching treatment is performed in the widthwise direction of the stretchable laminate or, for example, treatment in which a fiber structure of a part of the region of the non-woven fabric layer is mechanically broken may be performed. When such treatment is performed, the stretchable laminate can be stretched by a smaller force. The activation treatment can be performed by the same method as that for the stretching treatment and the activation treatment described in the section B. The activation treatment is preferably further performed after the lamination. The performance of the activation treatment after the lamination of the non-woven fabric layer and the elastomer layer provides a stretchable laminate that is more excellent in elongation.

In one embodiment, bonding with an ultrasonic wave and bonding with a pressure-sensitive adhesive may be used in combination. When the bondings are used in combination, the bonding with the ultrasonic wave and the bonding with the pressure-sensitive adhesive may be performed on the entirety of the non-woven fabric layer and the elastomer layer, or the bonding with the ultrasonic wave and the bonding with the pressure-sensitive adhesive may be performed on part of the layers. In addition, the following may be adopted: one of the bonding methods is performed on the entirety of the non-woven fabric layer and the elastomer layer, and the other bonding method is performed on part of the layers.

In one embodiment, the method of manufacturing a stretchable laminate includes: activating the long-fiber hydroentangled non-woven fabric; and bonding the activated non-woven fabric and the elastomer layer to each other by at least one kind of bonding method selected from the group consisting of ultrasonic welding and bonding via a pressure-sensitive adhesive layer. The activating the long-fiber hydroentangled non-woven fabric, and the bonding the activated non-woven fabric and the elastomer layer to each other are preferably continuously performed inline. When those steps are continuously performed inline, the stretchable laminate including the non-woven fabric layer and the elastomer layer can be manufactured at lower cost. In addition, the method preferably further includes activating the non-woven fabric and the elastomer layer bonded to each other.

In one embodiment, the method of manufacturing a stretchable laminate further includes shrinking the long-fiber hydroentangled non-woven fabric in the first direction. Any appropriate method may be used as a method of shrinking the long-fiber hydroentangled non-woven fabric in the first direction. Examples thereof include: a method including stretching the long-fiber hydroentangled non-woven fabric in a direction substantially perpendicular to the first direction to shrink the fabric; and a method including heating the long-fiber hydroentangled non-woven fabric to which heat shrinkability has been imparted by any appropriate method to shrink the fabric.

Specifically, the long-fiber hydroentangled non-woven fabric can be shrunk in the first direction by the following procedure. The long-fiber hydroentangled non-woven fabric is uniaxially stretched between two stretching rolls. Herein, the peripheral speed of the stretching roll on the downstream side of the conveying direction of the fabric is made faster than the peripheral speed of the stretching roll on the upstream side thereof, and the long-fiber hydroentangled non-woven fabric is stretched while tension is applied thereto. The stretching rolls each preferably have a nip roll. When the long-fiber hydroentangled non-woven fabric is conveyed under the state of being sandwiched between the stretching roll and the nip roll, the long-fiber hydroentangled non-woven fabric can be fixed onto the stretching roll. In one embodiment, at least one of the stretching rolls is a heating roll. When the heating roll is used, the long-fiber hydroentangled non-woven fabric can be shrunk in the first direction by a dry stretching method including stretching the long-fiber hydroentangled non-woven fabric in air while heating the fabric. In one embodiment, the long-fiber hydroentangled non-woven fabric can be shrunk in the first direction by a wet stretching method including stretching the long-fiber hydroentangled non-woven fabric while immersing the fabric in any appropriate solution.

In one embodiment, the method of manufacturing a stretchable laminate further includes activating the elastomer layer. The activation of the elastomer layer may be performed by any appropriate method. The elastomer layer may be activated by using, for example, a method given as an example of the method of activating the non-woven fabric described above.

### E. Application of Stretchable Laminate of the Present Invention

The stretchable laminate of the present invention can be used in any appropriate article in which the effects of the present invention can be effectively utilized. That is, the article of the present invention includes the above-mentioned stretchable laminate. A typical example of such article is a sanitary article. Examples of such sanitary article include a diaper (in particular, an ear portion of a disposable diaper), a supporter, and a mask.

### Examples

The present invention is hereinafter specifically described by way of Examples. However, the present invention is by no means limited to these Examples. Evaluation methods in Examples and the like are as described below. In addition, "part(s)" means "part(s) by weight" and "%" means "wt%" unless otherwise stated.

### [Example 1]

An elastomer layer (hereinafter sometimes referred to as "elastic film") was extrusion-molded with an extrusion T-die molding machine including three layers in two types (A layer/B layer/A layer). Specifically, 50 parts by weight of an olefin-based resin 1 (manufactured by Exxon Mobil Corporation, product name: Vistamaxx 3980) and 50 parts by weight of an olefin-based resin 2 (manufactured by National Petrochemical Company, product name: 52518, HDPE) were loaded into each of the A layers of the extruder, and 46.5 parts by weight of a styrene-based resin 1 (manufactured by Zeon Corporation, product name: Quintac 3390), 46.5 parts by weight of a styrene-based resin 2 (manufactured by Zeon Corporation, product name: Quintac 3620), and 7 parts by weight of a white pigment (titanium oxide, manufactured by Ampacet Corporation, product name: White PE MB 111413) were loaded into the B layer of the extruder, followed by the extrusion molding of an elastic film 1 having a thickness of 50 µm (A layer/B layer/A layer=2 µm/46 µm/2 µm). The extrusion was performed under the following temperature conditions: A layer: 200°C, B layer: 230°C, die temperature: 230°C.

A non-woven fabric (PP long-fiber hydroentangled type, basis weight=19 gsm) was activated with two apparatus, each of which vertically included two uneven rolls each having a tip radius R of a convex portion of 1 mm and a pitch width of 7 mm, and was configured to activate the fabric by vertically superimposing the rolls thereon, to depths of 4.7 mm and 7 mm vertically in a stepwise manner to provide an activated non-woven fabric 1.

The activated non-woven fabric 1 was directly laminated on each of both the surfaces of the resultant elastic film 1, and ultrasonic bonding was performed so that the film and the fabrics were completely bonded to each other. The ultrasonic bonding was performed by subjecting the non-woven fabric, the elastic film, and the other non-woven fabric in a three-layer laminated state to ultrasonic fusion lamination with an ultrasonic fusion facility (manufactured by Herrmann Ultraschall, apparatus name: MICROBOND (ULTRABOND 48:20)) at a frequency of 20 kHz (output intensity: 1,800 W) and a line velocity of 100 m/min. An embossed pattern roll used in the fusion was a roll having a dot pattern having a fusion area of 8% and a diameter of 0.7 mm. Thus, a stretchable laminate 1 was obtained.

### [Example 2]

A stretchable laminate 2 was obtained in the same manner as in Example 1 except that an elastic film 2 having a thickness of 45 µm (A layer/B layer/A layer=1.8 µm/41.4 µm/1.8 µm) was produced.

### [Example 3]

A stretchable laminate 3 was obtained in the same manner as in Example 1 except that an elastic film 3 having a thickness of 35 µm (A layer/B layer/A layer=1.4 µm/32.2 µm/1.4 um) was produced.

### [Example 4]

A stretchable laminate 4 was obtained in the same manner as in Example 1 except that an elastic film 4 having a thickness of 30 µm (A layer/B layer/A layer=1.2 µm/27.6 µm/1.2 µm) was produced.

### [Example 5]

A stretchable laminate 5 was obtained in the same manner as in Example 1 except that an elastic film 5 was produced by using 50 parts by weight of the olefin-based resin 1 (manufactured by Exxon Mobil Corporation, product name: Vistamaxx 3980) and 50 parts by weight of an olefin-based resin 3 (manufactured by SCG Plastics Company Limited, product name: PP756C, rPP) in each of the A layers.

### [Example 6]

A stretchable laminate 6 was obtained in the same manner as in Example 5 except that an elastic film 6 having a thickness of 35 µm (A layer/B layer/A layer=1.4 µm/32.2 µm/1.4 um) was produced.

### [Example 7]

A stretchable laminate 7 was obtained in the same manner as in Example 1 except that an elastic film 7 was produced by using: 100 parts by weight of the styrene-based resin 1 (manufactured by Zeon Corporation, product name: Quintac 3390) in each of the A layers; and 95 parts by weight of the styrene-based resin 1 (manufactured by Zeon Corporation, product name: Quintac 3390) and 5 parts by weight of the white pigment (titanium oxide, manufactured by Ampacet Corporation, product name: White PE MB 111413) in the B layer.

### [Example 8] (not according to the invention)

A stretchable laminate 8 was obtained in the same manner as in Example 1 except that an elastic film 8 having a thickness of 45 µm (A layer/B layer/A layer=1.8 µm/41.4 µm/1.8 um) was produced by using: 50 parts by weight of the olefin-based resin 1 (manufactured by Exxon Mobil Corporation, product name: Vistamaxx 3980) and 50 parts by weight of the olefin-based resin 2 (manufactured by National Petrochemical Company, product name: 52518, HDPE) in each of the A layers; and 46.5 parts by weight of an olefin-based resin 4 (manufactured by Exxon Mobil Corporation, product name: Vistamaxx 6202), 46.5 parts by weight of an olefin-based resin 5 (manufactured by Mitsui Chemicals, Inc., product name: Tafmer PN-3560), and 7 parts by weight of the white pigment (titanium oxide, manufactured by Ampacet Corporation, product name: White PE MB 111413) in the B layer.

### [Example 9]

213 Parts by weight of a SIS-based resin (manufactured by Kraton Polymers, Inc., product name: Kraton D1165 PT), 619 parts by weight of a tackifier (manufactured by Kolon Industries, Inc., product name: SUKOREZ SU-100 S), 84 parts by weight of liquid paraffin (manufactured by Petro yag, product name: White Oil Pharma Oyster 259), and 10 parts by weight of an antioxidant (manufactured by BASF, product name: Irganox 1010) were mixed to provide a hot-melt pressure-sensitive adhesive.

The hot-melt pressure-sensitive adhesive was applied to each of one surface of the activated non-woven fabric 1 obtained in Example 1 and one surface of a non-woven fabric (PP long-fiber hydroentangled type, basis weight=19 gsm) that was not subjected to any activation treatment in a stripe manner (width of a pressure-sensitive adhesive layer: 1 mm, interval: 1 mm, application amount: 8 g/m²), and the fabrics were bonded to both the surfaces of the elastic film 2 obtained in Example 2 on rolls to provide a laminate.

The resultant laminate was introduced into the activation apparatus used in Example 1 to provide a stretchable laminate 9.

### [Example 10]

The stretchable laminate 2 obtained in Example 2 was introduced into the activation apparatus used in Example 1, and was vertically activated to depths of 4 mm and 6.7 mm in a stepwise manner to provide a stretchable laminate 10.

### [Example 11]

A non-woven fabric (PP long-fiber hydroentangled type, basis weight=19 gsm) was introduced into the activation apparatus used in Example 1, and was vertically activated to depths of 4 mm and 6 mm in a stepwise manner to provide an activated non-woven fabric 2. A stretchable laminate 11 was obtained in the same manner as in Example 2 except that the resultant activated non-woven fabric 2 was used.

### [Example 12]

A stretchable laminate 12 was obtained in the same manner as in Example 3 except that the embossed pattern roll used in the ultrasonic fusion bonding was changed to a roll having a dot pattern having a fusion area of 6% and a diameter of 0.7 mm.

### [Example 13]

A stretchable laminate 13 was obtained in the same manner as in Example 3 except that the embossed pattern roll used in the ultrasonic fusion bonding was changed to a roll having a dot pattern having a fusion area of 10% and a diameter of 0.9 mm.

### [Example 14]

A stretchable laminate 14 was obtained in the same manner as in Example 9 except that an elastic film 14, which was obtained by introducing the elastic film 1 obtained in Example 1 into the activation apparatus and activating the film to a depth of 7 mm, was used.

### [Example 15]

A stretchable laminate 15 was obtained in the same manner as in Example 9 except that: an elastic film 15, which was obtained by introducing the elastic film 2 obtained in Example 2 into the activation apparatus and activating the film to a depth of 7 mm, was used; and a non-woven fabric (PP long-fiber hydroentangled type, basis weight=19 gsm) was used on one side of the film, and an activated non-woven fabric (non-woven fabric obtained by introducing a PP carded type non-woven fabric having a basis weight of 20 gsm into the activation apparatus and activating the fabric to depths of 4 mm and 5 mm) was used on the other side thereof.

### [Example 16]

A stretchable laminate 16 was obtained in the same manner as in Example 15 except that a long-fiber hydroentangled non-woven fabric having a basis weight of 22 gsm (PP long-fiber hydroentangled type, basis weight=22 gsm) was used as a long-fiber hydroentangled non-woven fabric.

### [Example 17]

A stretchable laminate 17 was obtained in the same manner as in Example 2 except that a non-woven fabric, which was obtained by introducing a long-fiber hydroentangled non-woven fabric (PP long-fiber hydroentangled type, basis weight=22 gsm) into the activation apparatus and activating the fabric to depths of 4.7 mm and 7 mm, was used.

### [Example 18]

Mechanical tension was applied in the lengthwise direction of a non-woven fabric (PP long-fiber hydroentangled type, basis weight=19 gsm) to shrink its width in a direction perpendicular to the lengthwise direction by 50%. Thus, a non-woven fabric shrunk in its widthwise direction was obtained. A stretchable laminate 18 was obtained in the same manner as in Example 2 except that the resultant non-woven fabric was used without being activated.

### [Example 19]

Mechanical tension was applied in the lengthwise direction of a non-woven fabric (PP long-fiber hydroentangled type, basis weight=19 gsm) to shrink its width in a direction perpendicular to the lengthwise direction by 40% . Thus, a non-woven fabric shrunk in its widthwise direction was obtained. A stretchable laminate 19 was obtained in the same manner as in Example 2 except that the resultant non-woven fabric was used.

### [Example 20]

Mechanical tension was applied in the lengthwise direction of a non-woven fabric (PP long-fiber hydroentangled type, basis weight=22 gsm) to shrink its width in a direction perpendicular to the lengthwise direction by 50%. Thus, a non-woven fabric shrunk in its widthwise direction was obtained. A stretchable laminate 20 was obtained in the same manner as in Example 1 except that the resultant non-woven fabric was used.

### [Example 21]

Mechanical tension was applied in the lengthwise direction of a non-woven fabric (PP long-fiber hydroentangled type, basis weight=22 gsm) to shrink its width in a direction perpendicular to the lengthwise direction by 50%. Thus, a non-woven fabric shrunk in its widthwise direction was obtained. A stretchable laminate 21 was obtained in the same manner as in Example 3 except that the resultant non-woven fabric was used.

### [Example 22]

A stretchable laminate was obtained in the same manner as in Example 1 except that: the elastic film 15 obtained in Example 15 was used; and a non-woven fabric (PP long-fiber hydroentangled type, basis weight=19 gsm) and another non-woven fabric (PP carded type, basis weight=24 gsm) were laminated on both the surfaces of the elastic film 15. The resultant stretchable laminate was introduced into the activation apparatus used in Example 1, and was activated to depths of 4 mm and 5 mm to provide a stretchable laminate 22.

### (Comparative Example 1)

A stretchable laminate C1 was obtained in the same manner as in Example 2 except that a non-woven fabric obtained through the activation of a non-woven fabric (PP spunbonded type, basis weight=19 gsm) by the same method as that of Example 1 was used as each of the non-woven fabric layers.

### (Comparative Example 2)

A stretchable laminate C2 was obtained in the same manner as in Example 2 except that a non-woven fabric obtained through the activation of a non-woven fabric (PP carded type, basis weight=24 gsm) by the same method as that of Example 1 was used as each of the non-woven fabric layers.

### (Comparative Example 3)

A non-woven fabric obtained through the activation of a non-woven fabric (PP spunbonded type, basis weight=19 gsm) by the same method as that of Example 1 was used as each of the non-woven fabric layers. The non-woven fabric and the elastomer layer were bonded to each other in the same manner as in Example 2 except for the foregoing, and activation treatment was performed in the same manner as in Example 10 under a state in which the non-woven fabric layers and the elastomer layer were laminated. Thus, a stretchable laminate C3 was obtained.

### (Comparative Example 4)

A non-woven fabric obtained through the activation of a non-woven fabric (PP carded type, basis weight=24 gsm) by the same method as that of Example 1 was used as each of the non-woven fabric layers. Activation treatment was performed in the same manner as in Example 10 except for the foregoing under a state in which the non-woven fabric layers and the elastomer layer were laminated. Thus, a stretchable laminate C4 was obtained.

### (Comparative Example 5)

A stretchable laminate C5 was obtained in the same manner as in Example 2 except that a non-woven fabric (PP carded type, basis weight=19 gsm) was used as each of the non-woven fabric layers.

### (Comparative Example 6)

A stretchable laminate C6 was obtained in the same manner as in Example 2 except that a non-woven fabric (PET spunlace type, basis weight=24 gsm) was used as each of the non-woven fabric layers .

### (Comparative Example 7)

A stretchable laminate C7 was obtained in the same manner as in Example 2 except that a non-woven fabric (PET spunlace type, basis weight=30 gsm) was used as each of the non-woven fabric layers.

### (Reference Example 1)

A stretchable laminate C8 was obtained in the same manner as in Example 2 except that a non-woven fabric obtained through the activation of a non-woven fabric (PP spunlace type, basis weight=30 gsm) by the same method as that of Example 1 was used as each of the non-woven fabric layers.

### (Reference Example 2)

A stretchable laminate C9 was obtained in the same manner as in Example 2 except that a non-woven fabric (PP spunlace type, basis weight=30 gsm) was used as each of the non-woven fabric layers.

### [Evaluation]

The non-woven fabrics used in Examples, Comparative Examples, and Reference Examples, and the stretchable laminates obtained in Examples, Comparative Examples, and Reference Examples were subjected to the following evaluations. The results are shown in Table 1 and Table 2.

### <Tensile Test>

The non-woven fabrics, the activated non-woven fabrics, and the resultant stretchable laminates were evaluated for their tensile characteristics by being subjected to the following test. The non-woven fabrics, the activated non-woven fabrics, and the resultant stretchable laminates were each cut into a piece having a width of 50 mm and a length of 10 cm so that its direction (CD) perpendicular to a film machine direction (MD) served as a long side. Thus, a sample was obtained. Each of the samples was set in a tensile testing machine (manufactured by ZwickRoell GmbH & Co KG, product name: Z0005 1 kN) so that a distance between chucks became 40 mm, followed by pulling at a tensile speed of 500 mm/min until its breakage. The breaking strength of the sample at that time, and the elongation thereof at 5 N (the non-woven fabrics and the activated non-woven fabrics) or 10 N (the stretchable laminates) were measured.

It was evaluated from the measurement results of the elongation of each of the stretchable laminates at 10 N and the breaking strength thereof obtained in the tensile test on the basis of the following criteria whether or not the laminate was able to achieve both of the elongation and the breaking strength. The laminate in which any one of the elongation and the breaking strength did not satisfy the following ranges was evaluated as being unacceptable.
The breaking strength is 40 N or more, and the elongation is 100% or more: best
The breaking strength is 35 N or more, and the elongation is 90% or more: good
The breaking strength is 30 N or more, and the elongation is 70% or more: acceptable

### <Odor>

A product obtained by cutting each of the stretchable laminates into an area of 100 cm² was used as a sample. The sample was hermetically sealed in a glass bottle having a volume of 200 ml, and was stored in a heating oven at 50°C for 1 day. After that, the sample was removed from the oven and returned to room temperature, followed by the smelling of its odor. The sample whose odor was not felt at all was evaluated as being best, the sample whose odor was slightly felt but was not unpleasant was evaluated as being good, and the sample whose odor was somewhat unpleasant was evaluated as being acceptable.

### <Weight of Non-woven Fabric>

The weight of a sample obtained by cutting each of the non-woven fabrics into an area of 100 cm² was measured with an electronic balance, and was converted into the unit of g/m².

**Table 1**

| | | | | | | | | Example | | | | | | |
|---|---|---|---|---|---|---|---|---|---|---|---|---|---|---|
| | | 1 | 2 | 3 | 4 | 5 | 6 | 7 | 8 | 9 | 10 | 11 | 12 | 13 |
| Film formulation | | | | | | | | | | | | | | |
| A layer resin (1) | - | Vistama xx 3980 | Vistama xx 3980 | Vistama xx 3980 | Vistama xx 3980 | Vistama xx 3980 | Vistama xx 3980 | Quintac 3390 | Vistama xx 3980 | Vistama xx 3980 | Vistama xx 3980 | Vistama xx 3980 | Vistama xx 3980 | Vistama xx 3980 |
| A layer resin (2) | - | 52518 (HDPE) | 52518 (HDPE) | 52518 (HDPE) | 52518 (HDPE) | PP756C (r-PP) | PP756C (r-PP) | - | PP756C (r-PP) | 52518 (HDPE) | 52518 (HDPE) | 52518 (HDPE) | 52518 (HDPE) | 52518 (HDPE) |
| B layer resin (1) | - | Quintac 3390 | Quintac 3390 | Quintac 3390 | Quintac 3390 | Quintac 3390 | Quintac 3390 | Quintac 3390 | Vistama xx 6202 | Quintac 3390 | Quintac 3390 | Quintac 3390 | Quintac 3390 | Quintac 3390 |
| B layer resin (2) | - | Quintac 3620 | Quintac 3620 | Quintac 3620 | Quintac 3620 | Quintac 3620 | Quintac 3620 | - | Tafmer PN-3560 | Quintac 3620 | Quintac 3620 | Quintac 3620 | Quintac 3620 | Quintac 3620 |
| B layer resin (3) | < | TiO₂ MB | TiO₂ MB | TiO₂ MB | TiO₂ MB | TiO₂ MB | TiO₂ MB | TiO₂ MB | TiO₂ MB | TiO₂ MB | TiO₂ MB | TiO₂ MB | TiO₂ MB | TiO₂ MB |
| A layer formulation (1)/(2) | - | 50/50 | 50/50 | 50/50 | 50/50 | 50/50 | 50/50 | 100/0 | 50/50 | 50/50 | 50/50 | 50/50 | 50/50 | 50/50 |
| B layer formulation (1)/(2)/(3) | - | 46.5/46 .5/7 | 46.5/46 .5/7 | 46.5/46 .5/7 | 46.5/46 .5/7 | 46.5/46 .5/7 | 46.5/46 .5/7 | 95/0/5 | 46.5/46 .5/7 | 46.5/46 .5/7 | 46.5/46 .5/7 | 46.5/46 .5/7 | 46.5/46 .5/7 | 46.5/46 .5/7 |
| A/B/A thickness | *µ*m | 2/46/2 | 1.8/41. 4/1.8 | 1.4/32. 2/1.4 | 1.2/27. 6/1.2 | 2/46/2 | 1.4/32. 2/1.4 | 2/46/2 | 1.8/41. 4/1.8 | 1.8/41. 4/1.8 | 1.8/41. 4/1.8 | 1.8/41. 4/1.8 | 1.4/32. 2/1.4 | 1.4/32. 2/1.4 |
| Total thickness of elastic film | *µ*m | 50 | 45 | 35 | 30 | 50 | 35 | 50 | 45 | 45 | 45 | 45 | 35 | 35 |

| Kind of non-woven fabric | | | | | | | | | | | | | | |
|---|---|---|---|---|---|---|---|---|---|---|---|---|---|---|
| Manufacturing method | - | Long-fi ber hydroen tanglin g | Long-fi ber hydroen tanglin g | Long-fi ber hydroen tanglin 9 | Long-fi ber hydroen tanglin g | Long-fi ber hydroen tanglin 9 | Long-fi ber hydroen tanglin g | Long-fi ber hydroen tanglin 9 | Long-fi ber hydroen tanglin 9 | Long-fi ber hydroen tanglin 9 | Long-fi ber hydroen tanglin g | Long-fi ber hydroen tanglin g | Long-fi ber hydroen tanglin g | Long-fi ber hydroen tanglin g |
| Fiber surface resin | - | PP | PP | PP | PP | PP | PP | PP | PP | PP | PP | PP | PP | PP |
| Weight | g/m² | 19 | 19 | 19 | 19 | 19 | 19 | 19 | 19 | 19 | 19 | 19 | 19 | 19 |

| Bonding system | | | | | | | | | | | | | | |
|---|---|---|---|---|---|---|---|---|---|---|---|---|---|---|
| Kind | - | Ultraso nic bonding | Ultraso nic bonding | Ultraso nic bonding | Ultraso nic bonding | Ultraso nic bonding | Ultraso nic bonding | Ultraso nic bonding | Ultraso nic bonding | Bonding with HM pressur e-sensi tive adhesiv e | Ultraso nic bonding | Ultraso nic bonding | Ultraso nic bonding | Ultraso nic bonding |
| Pattern and | % | Dot, 8% | Dot, 8% | Dot, 8% | Dot, 8% | Dot, 8% | Dot, 8% | Dot, 8% | Dot, 8% | - | Dot, 8% | Dot, 8% | Dot, 6% | Dot, 10% |
| area | | | | | | | | | | | | | | |

| Other step | | | | | | | | | | | | | | |
|---|---|---|---|---|---|---|---|---|---|---|---|---|---|---|
| Other step (1) | - | Activat ion of non-wov en fabric (both surface s) | Activat ion of non-wov en fabric (both surface s) | Activat ion of non-wov en fabric (both surface s) | Activat ion of non-wov en fabric (both surface s) | Activat ion of non-wov en fabric (both surface s) | Activat ion of non-wov en fabric (both surface s) | Activat ion of non-wov en fabric (both surface s) | Activat ion of non-wov en fabric (both surface s) | Activat ion of non-wov en fabric (one surface ) | Activat ion of non-wov en fabric (both surface s) | Activat ion of non-wov en fabric (both surface s) | Activat ion of non-wov en fabric (both surface s) | Activat ion of non-wov en fabric (both surface s) |
| Other step (2) | - | - | - | - | - | - | - | - | - | Activat ion of laminat e | Activat ion of laminat e | - | - | - |
| Other step (3) | - | - | - | - | - | - | - | - | - | - | - | - | - | - |

| Evaluation result | | | | | | | | | | | | | | |
|---|---|---|---|---|---|---|---|---|---|---|---|---|---|---|
| Breaking strength (non-woven fabric) | N/50 mm | 24.3 | 24.3 | 24.3 | 24.3 | 24.3 | 24.3 | 24.3 | 24.3 | 24.3 | 24.3 | 28.5 | 24.3 | 24.3 |
| Elongation at 5 N (non-woven fabric) | %/50 mm | 165 | 165 | 165 | 165 | 165 | 165 | 165 | 165 | 165 | 165 | 112.4 | 164.9 | 164.9 |
| Breaking strength (laminate) | N/50 mm | 53.6 | 54.2 | 52.2 | 52.0 | 52.2 | 51.3 | 52.7 | 54.7 | 49.0 | 51.7 | 55.8 | 50.8 | 53.2 |
| Elongation at 10 N (laminate) | %/50 mm | 100 | 100 | 109 | 106 | 100 | 105 | 96 | 83 | 94 | 112 | 82 | 128 | 102 |
| Achievement of both of breaking strength and elongation | - | Best | Best | Best | Best | Best | Best | Good | Accepta ble | Good | Best | Accepta ble | Best | Best |
| Odor (laminate) | - | Good | Good | Good | Good | Good | Good | Accepta ble | Best | Accepta ble | Good | Good | Good | Good |

**Table 2**

| | | Example | | | | | | | | | | | |
|---|---|---|---|---|---|---|---|---|---|---|---|---|---|
| | | 14 | | 15 | 16 | | 17 | 18 | 19 | 20 | 21 | 22 | |
| Film formulation | | Film formulation | | | | | | | | | | | |
| A layer resin (1) | - | Vistamaxx 3980 | Vistamaxx 3980 | | Vistamaxx 3980 | | Vistamaxx 3980 | Vistamaxx 3980 | Vistamaxx 3980 | Vistamaxx 3980 | Vistamaxx 3980 | Vistamaxx 3980 | |
| A layer resin (2) | - | 52518 (HDPE) | 52518 (HDPE) | | 52518 (HDPE) | | 52518 (HDPE) | 52518 (HDPE) | 52518 (HDPE) | 52518 (HDPE) | 52518 (HDPE) | 52518 (HDPE) | |
| B layer resin (1) | - | Quintac 3390 | Quintac 3390 | | Quintac 3390 | | Quintac 3390 | Quintac 3390 | Quintac 3390 | Quintac 3390 | Quintac 3390 | Quintac 3390 | |
| B layer resin (2) | < | Quintac 3620 | Quintac 3620 | | Quintac 3620 | | Quintac 3620 | Quintac 3620 | Quintac 3620 | Quintac 3620 | Quintac 3620 | Quintac 3620 | |
| B layer resin (3) | - | TiO₂ MB | TiO₂ MB | | TiO₂ MB | | TiO₂ MB | TiO₂ MB | TiO₂ MB | TiOz MB | TiO₂ MB | TiO₂ MB | |
| A layer formulati on (1)/(2) | - | 50/50 | 50/50 | | 50/50 | | 50/50 | 50/50 | 50/50 | 50/50 | 50/50 | 50/50 | |
| B layer formulati on (1)/(2)/( 3) | - | 46.5/46.5/ 7 | 46.5/46.5/7 | | 46.5/46.5/7 | | 46.5/46.5/7 | 46.5/46.5 /7 | 46.5/46.5/7 | 46.5/46.5/7 | 46.5/46.5/7 | 46.5/46.5/7 | |
| A/B/A thickness | *µ*m | 2/46/2 | 1.8/41.4/1.8 | | 1.8/41.4/1.8 | | 1.8/41.4/1.8 | 1.8/41.4/ 1.8 | 1.8/41.4/1.8 | 2/46/2 | 1.4/32.2/1.4 | 1.8/41.4/1.8 | |
| Total thickness of elastic film | *µ*m | 50 | 45 | | 45 | | 45 | 45 | 45 | 50 | 35 | 45 | |

| Kind of non-woven fabric | | | | | | | | | | | | | |
|---|---|---|---|---|---|---|---|---|---|---|---|---|---|
| Manufactu ring method | - | Long-fiber hydroentan gling | Long-f iber hydroe ntangl ing | Carded | Long-f iber hydroe ntangl ing | Carded | Long-fiber hydroentangl ing | Long-fibe r hydroenta ngling (shrinkag e of width) | Long-fiber hydroentangl ing (shrinkage of width) | Long-fiber hydroentangl ing (shrinkage of width) | Long-fiber hydroentangl ing (shrinkage of width) | Long-fi ber hydroen tanglin g | Carde d |
| Fiber surface resin | - | PP | PP | PP | PP | PP | PP | PP | PP | PP | PP | PP | PP |
| Weight | g/m² | 19 | 19 | 20 | 22 | 20 | 22 | 30 | 25 | 33 | 33 | 19 | 24 |

| Bonding system | | | | | | | | | | | | | |
|---|---|---|---|---|---|---|---|---|---|---|---|---|---|
| Kind | - | Bonding - with HM | Bonding | with HM pressure-sensi | Bonding pressure-sensi | with HM | Ultrasonic bonding | Ultrasoni c bonding | Ultrasonic bonding | Ultrasonic bonding | Ultrasonic bonding | Ultrasonic bonding | |
| | | pressure-s ensitive adhesive | tive adhesive | | tive adhesive | | | | | | | | |
| Pattern and area | % | - | - | | - | | Dot, 8% | Dot, 8% | Dot, 8% | Dot, 8% | Dot, 8% | Dot, 8% | |

| Other step | | | | | | | | | | | | | |
|---|---|---|---|---|---|---|---|---|---|---|---|---|---|
| Other step (1) | - | Activation of non-woven fabric (one surface) | | Activa tion of non-wo ven fabric | | Activa tion of non-wo ven fabric | Activation of non-woven fabric (both surfaces) | - | Activation of non-woven fabric (both surfaces) | Activation of non-woven fabric (both surfaces) | Activation of non-woven fabric (both surfaces) | Activation of film | |
| Other step (2) | - | Activation of film | Activation of film | | Activation of film | | | - | | Shrinkage of non-woven fabric (both surfaces) | Shrinkage of non-woven fabric (both surfaces) | Activation of laminate | |
| Other step (3) | - | Activation of laminate | Activation of laminate | | Activation of laminate | | | | | | - | - | |

| Evaluation result | | | | | | | | | | | | | |
|---|---|---|---|---|---|---|---|---|---|---|---|---|---|
| Breaking strength (non-wove n fabric) | N/50 mm | 24.3 | 35.2 | 6.0 | 37.5 | 6.0 | 25.7 | 26.2 | 22.2 | 26.3 | 26.3 | 35.2 | 9.3 |
| Elongatio n at 5 N (non-wove n fabric) | %/50 mm | 165 | 45 | 90 | 44 | 90 | 152 | 118 | 143 | 138 | 138 | 45 | 99 |
| Breaking strength (laminate ) | N/50 mm | 50.0 | 36.0 | | 38.2 | | 53.0 | 52.7 | 39.7 | 54.2 | 52.8 | 35.0 | |
| Elongatio n at 10 N (laminate) | %/50 mm | 106 | 144 | | 138 | | 95 | 80 | 82 | 89 | 97 | 78 | |
| Achieveme nt of both of breaking strength and elongatio n | | Best | Good | | Good | | Good | Acceptabl e | Acceptable | Acceptable | Good | Acceptable | |
| Odor (laminate ) | | Acceptable | Acceptable | | Acceptable | | Good | Good | Good | Good | Good | Good | |

**Table 3**

| | | Comparative Example | | | | | | | Reference Example | |
|---|---|---|---|---|---|---|---|---|---|---|
| | | 1 | 2 | 3 | 4 | 5 | 6 | 7 | 1 | 2 |
| Film formulation | | | | | | | | | | |
| A layer resin (1) | - | Vistamaxx 3980 | Vistamaxx 3980 | Vistamaxx 3980 | Vistamaxx 3980 | Vistamaxx 3980 | Vistamaxx 3980 | Vistamaxx 3980 | Vistamaxx 3980 | Vistamaxx 3980 |
| A layer resin (2) | - | 52518 (HDPE) | 52518 (HDPE) | 52518 (HDPE) | 52518 (HDPE) | 52518 (HDPE) | 52518 (HDPE) | 52518 (HDPE) | 52518 (HDPE) | 52518 (HDPE) |
| B layer resin (1) | - | Quintac 3390 | Quintac 3390 | Quintac 3390 | Quintac 3390 | Quintac 3390 | Quintac 3390 | Quintac 3390 | Quintac 3390 | Quintac 3390 |
| B layer resin (2) | - | Quintac 3620 | Quintac 3620 | Quintac 3620 | Quintac 3620 | Quintac 3620 | Quintac 3620 | Quintac 3620 | Quintac 3620 | Quintac 3620 |
| B layer resin (3) | - | TiO₂ MB | TiO₂ MB | TiO₂ MB | TiOz MB | TiOz MB | TiOz MB | TiOz MB | TiO₂ MB | TiO₂ MB |
| A layer formulation (1)/(2) | - | 50/50 | 50/50 | 50/50 | 50/50 | 50/50 | 50/50 | 50/50 | 50/50 | 50/50 |
| B layer formulation (1)/(2)/(3) | - | 46.5/46.5/ 7 | 46.5/46.5/ 7 | 46.5/46.5/ 7 | 46.5/46.5/ 7 | 46.5/46.5/ 7 | 46.5/46.5/ 7 | 46.5/46.5/7 | 46.5/46.5/7 | 46.5/46.5/7 |
| A/B/A thickness | *µ*m | 1.8/41.4/1 .8 | 1.8/41.4/1 .8 | 1.8/41.4/1 .8 | 1.8/41.4/1 .8 | 1.8/41.4/1 .8 | 1.8/41.4/1 .8 | 1.8/41.4/1.8 | 1.8/41.4/1. 8 | 1.8/41.4/1. 8 |
| Total thickness of elastic film | *µ*m | 45 | 45 | 45 | 45 | 45 | 45 | 45 | 45 | 45 |

| Kind of non-woven fabric | | | | | | | | | | |
|---|---|---|---|---|---|---|---|---|---|---|
| Manufacturing method | - | Spunbonded | Carded | Spunbonded | Carded | Spunbonded | Carded | Spunlace | Spunlace | Spunlace |
| Fiber surface resin | - | PP | PP | PP | PP | PP | PP | PET | PP | PP |
| Weight | g/m² | 19 | 24 | 19 | 24 | 19 | 24 | 30 | 30 | 30 |

| Bonding system | | | | | | | | | | |
|---|---|---|---|---|---|---|---|---|---|---|
| Kind | - | Ultrasonic bonding | Ultrasonic bonding | Ultrasonic bonding | Ultrasonic bonding | Ultrasonic bonding | Ultrasonic bonding | Ultrasonic bonding | Ultrasonic bonding | Ultrasonic bonding |
| Pattern and area | % | Dot, 8% | Dot, 8% | Dot, 8% | Dot, 8% | Dot, 8% | Dot, 8% | Dot, 8% | Dot, 8% | Dot, 8% |

| Other step | | | | | | | | | | |
|---|---|---|---|---|---|---|---|---|---|---|
| Other step (1) | | Activation of non-woven fabric (both surfaces) | Activation of non-woven fabric (both surfaces) | Activation of non-woven fabric (both surfaces) | Activation of non-woven fabric (both surfaces) | - | - | - | Activation of non-woven fabric (both surfaces) | - |
| Other step (2) | - | - | | Activation of laminate | Activation of laminate | - | - | - | - | - |

| Evaluation result | | | | | | | | | | |
|---|---|---|---|---|---|---|---|---|---|---|
| Breaking strength (non-woven fabric) | N/50 mm | 9.3 | 4.2 | 9.3 | 4.2 | 15.8 | 5.5 | 22.2 | 21.7 | 22.2 |
| Elongation at 5 N (non-woven fabric) | %/50 mm | 29 | (Elongatio n did not reach 5 N) | 29 | (Elongatio n did not reach 5 N) | 16 | 136 | 141 | 162 | 141 |
| Breaking strength (laminate) | N/50 mm | 33.3 | 38.2 | Unable to obtain sample owing to tearing | 36.6 | 42.2 | 45.0 | Elastic film and non-woven fabric were not bonded to each other | 45.6 | 47.7 |
| Elongation at 10 N (laminate) | %/50 mm | 21 | 54 | Unable to obtain sample owing to tearing | 62 | 10 | 21 | Elastic film and non-woven fabric were not bonded to each other | 132 | 102 |
| Achievement of both of breaking strength and elongation | - | Unacceptab le | Unacceptab le | Unacceptab le | Unacceptab le | Unacceptab le | Unacceptab le | Unacceptable | Good | Good |
| Odor (laminate) | - | Good | Good | Good | Good | Good | Good | Good | Good | Good |

The stretchable laminates obtained in Examples 1 to 22 were each excellent in elongation and breaking strength. In addition, although none of the laminates used a spunlace non-woven fabric that was available at high cost, the laminates each exhibited performance comparable to that of each of the stretchable laminates of Reference Examples 1 and 2 each using the spunlace non-woven fabric.

### Industrial Applicability

The stretchable laminate of the present invention can be used in any appropriate article in which the effects of the present invention can be effectively utilized. The article of the present invention includes the stretchable laminate of the present invention. A typical example of such article is a sanitary article. Examples of such sanitary article include a diaper (in particular, an ear portion of a disposable diaper), a supporter, and a mask.

### Reference Signs List

- 100: stretchable laminate
- 10: elastomer layer
- 20: non-woven fabric layer
- 20a: non-woven fabric layer
- 20b: non-woven fabric layer
- 30: through-hole

## Claims

1. A stretchable laminate, comprising:
a non-woven fabric layer; and
an elastomer layer,
wherein the non-woven fabric layer is a long-fiber hydroentangled non-woven fabric,
wherein the elastomer layer is in the form of a film,
wherein the non-woven fabric layer and the elastomer layer are bonded to each other,
wherein the elastomer layer includes an intermediate layer and surface layers arranged on both sides of the intermediate layer, and
wherein the intermediate layer contains a styrene-based elastomer.

2. The stretchable laminate according to claim 1,
wherein the long-fiber hydroentangled non-woven fabric has a basis weight of 25 gsm or less.

3. The stretchable laminate according to claim 1 or 2,
wherein the long-fiber hydroentangled non-woven fabric has an elongation at 5 N of 50% or more.

4. The stretchable laminate according to any one of claims 1 to 3, wherein the long-fiber hydroentangled non-woven fabric has a breaking strength of 10 N or more.

5. The stretchable laminate according to any one of claims 1 to 4, wherein the long-fiber hydroentangled non-woven fabric has a breaking strength of 15 N or more.

6. The stretchable laminate according to any one of claims 1 to 5, wherein the long-fiber hydroentangled non-woven fabric is an activated non-woven fabric.

7. The stretchable laminate according to any one of claims 1 to 6, wherein the long-fiber hydroentangled non-woven fabric is a non-woven fabric shrunk in a first direction.

8. The stretchable laminate according to any one of claims 1 to 7, wherein the elastomer layer has a thickness of from 20 um to 200 µm.

9. The stretchable laminate according to any one of claims 1 to 8, wherein the surface layers each contain an olefin-based elastomer.

10. The stretchable laminate according to any one of claims 1 to 9, wherein the elastomer layer is an activated elastomer layer.

11. The stretchable laminate according to any one of claims 1 to 10, wherein the non-woven fabric layer and the elastomer layer are bonded to each other by ultrasonic welding.

12. An article, comprising the stretchable laminate of any one of claims 1 to 11.

13. A method of manufacturing the stretchable laminate according to any one of claims 1 to 11, the method comprising:
activating a long-fiber hydroentangled non-woven fabric; and
bonding the activated non-woven fabric and the elastomer layer to each other by at least one kind of bonding method selected from the group consisting of ultrasonic welding and bonding via a pressure-sensitive adhesive layer.

14. The method of manufacturing a stretchable laminate according to claim 13, wherein the activating the long-fiber hydroentangled non-woven fabric, and the bonding the activated non-woven fabric and the elastomer layer to each other are continuously performed inline.

15. The method of manufacturing a stretchable laminate according to claim 13 or 14, further comprising activating the non-woven fabric and the elastomer layer bonded to each other.

16. The method of manufacturing a stretchable laminate according to any one of claims 13 to 15, further comprising shrinking the long-fiber hydroentangled non-woven fabric in a first direction.

## Patentansprüche

1. Dehnbares Laminat, umfassend:
eine Vliesstoffschicht; und
eine Elastomerschicht,
wobei die Vliesstoffschicht ein wasserstrahlverfestigter Langfaservliesstoff ist,
wobei die Elastomerschicht in Form einer Folie vorliegt,
wobei die Vliesstoffschicht und die Elastomerschicht aneinander gebunden sind,
wobei die Elastomerschicht eine Zwischenschicht und Oberflächenschichten, die auf beiden Seiten der Zwischenschicht angeordnet sind, einschließt und
wobei die Zwischenschicht ein Elastomer auf Styrolbasis enthält.

2. Dehnbares Laminat nach Anspruch 1, wobei der wasserstrahlverfestigte Langfaservliesstoff ein Flächengewicht von 25 g/m² oder weniger aufweist.

3. Dehnbares Laminat nach Anspruch 1 oder 2, wobei der wasserstrahlverfestigte Langfaservliesstoff eine Dehnung bei 5 N von 50 % oder mehr aufweist.

4. Dehnbares Laminat nach einem der Ansprüche 1 bis 3, wobei der wasserstrahlverfestigte Langfaservliesstoff eine Bruchfestigkeit von 10 N oder mehr aufweist.

5. Dehnbares Laminat nach einem der Ansprüche 1 bis 4, wobei der wasserstrahlverfestigte Langfaservliesstoff eine Bruchfestigkeit von 15 N oder mehr aufweist.

6. Dehnbares Laminat nach einem der Ansprüche 1 bis 5, wobei der wasserstrahlverfestigte Langfaservliesstoff ein aktivierter Vliesstoff ist.

7. Dehnbares Laminat nach einem der Ansprüche 1 bis 6, wobei der wasserstrahlverfestigte Langfaservliesstoff ein in einer ersten Richtung geschrumpfter Vliesstoff ist.

8. Dehnbares Laminat nach einem der Ansprüche 1 bis 7, wobei die Elastomerschicht eine Dicke von 20 µm bis 200 µm aufweist.

9. Dehnbares Laminat nach einem der Ansprüche 1 bis 8, wobei die Oberflächenschichten jeweils ein Elastomer auf Olefinbasis enthalten.

10. Dehnbares Laminat nach einem der Ansprüche 1 bis 9, wobei die Elastomerschicht eine aktivierte Elastomerschicht ist.

11. Dehnbares Laminat nach einem der Ansprüche 1 bis 10, wobei die Vliesstoffschicht und die Elastomerschicht durch Ultraschallschweißen aneinander gebunden sind.

12. Gegenstand, der das dehnbare Laminat nach einem der Ansprüche 1 bis 11 umfasst.

13. Verfahren zur Herstellung des dehnbaren Laminats nach einem der Ansprüche 1 bis 11, das Verfahren umfassend:
Aktivieren eines wasserstrahlverfestigten Langfaservliesstoffs; und
Binden des aktivierten Vliesstoffs und der Elastomerschicht aneinander durch mindestens eine Art von Bindungsverfahren, ausgewählt aus der Gruppe bestehend aus Ultraschallschweißen und Binden mittels einer druckempfindlichen Haftmittelschicht.

14. Verfahren zur Herstellung eines dehnbaren Laminats nach Anspruch 13, wobei das Aktivieren des wasserstrahlverfestigten Langfaservliesstoffs und das Binden des aktivierten Vliesstoffs und der Elastomerschicht aneinander kontinuierlich Inline durchgeführt werden.

15. Verfahren zur Herstellung eines dehnbaren Laminats nach Anspruch 13 oder 14, das weiter das Aktivieren des Vliesstoffs und der Elastomerschicht, die aneinander gebundenen sind, umfasst.

16. Verfahren zur Herstellung eines dehnbaren Laminats nach einem der Ansprüche 13 bis 15, das weiter ein Schrumpfen des wasserstrahlverfestigten Langfaservliesstoffs in einer ersten Richtung umfasst.

## Revendications

1. Stratifié étirable, comprenant :
une couche de tissu non tissé ; et
une couche élastomère,
dans lequel la couche de tissu non tissé est un tissu non tissé à hydroenchevêtrement à longues fibres,
dans lequel la couche élastomère est sous la forme d'un film,
dans lequel la couche de tissu non tissé et la couche élastomère sont assemblées l'une à l'autre,
dans lequel la couche élastomère inclut une couche intermédiaire et des couches superficielles agencées des deux côtés de la couche intermédiaire, et
dans lequel la couche intermédiaire contient un élastomère à base de styrène.

2. Stratifié étirable selon la revendication 1, dans lequel le tissu non tissé à hydroenchevêtrement à longues fibres a un poids de base de 25 gsm ou moins.

3. Stratifié étirable selon la revendication 1 ou 2, dans lequel le tissu non tissé à hydroenchevêtrement à longues fibres a un allongement à 5 N de 50 % ou plus.

4. Stratifié étirable selon l'une quelconque des revendications 1 à 3, dans lequel le tissu non tissé à hydroenchevêtrement à longues fibres a une solidité à la rupture de 10 N ou plus.

5. Stratifié étirable selon l'une quelconque des revendications 1 à 4, dans lequel le tissu non tissé à hydroenchevêtrement à longues fibres a une solidité à la rupture de 15 N ou plus.

6. Stratifié étirable selon l'une quelconque des revendications 1 à 5, dans lequel le tissu non tissé à hydroenchevêtrement à longues fibres est un tissu non tissé activé.

7. Stratifié étirable selon l'une quelconque des revendications 1 à 6, dans lequel le tissu non tissé à hydroenchevêtrement à longues fibres est un tissu non tissé rétréci dans une première direction.

8. Stratifié étirable selon l'une quelconque des revendications 1 à 7, dans lequel la couche élastomère a une épaisseur allant de 20 µm à 200 µm.

9. Stratifié étirable selon l'une quelconque des revendications 1 à 8, dans lequel les couches superficielles contiennent chacune un élastomère à base d'oléfine.

10. Stratifié étirable selon l'une quelconque des revendications 1 à 9, dans lequel la couche élastomère est une couche élastomère activée.

11. Stratifié étirable selon l'une quelconque des revendications 1 à 10, dans lequel la couche de tissu non tissé et la couche élastomère sont assemblées l'une à l'autre par soudage ultrasonique.

12. Article, comprenant le stratifié étirable selon l'une quelconque des revendications 1 à 11.

13. Procédé de fabrication du stratifié étirable selon l'une quelconque des revendications 1 à 11, le procédé comprenant :
activer un tissu non tissé à hydroenchevêtrement à longues fibres ; et
assembler le tissu non tissé activé et la couche élastomère l'un à l'autre par au moins un type de procédé d'assemblage sélectionné parmi le groupe constitué du soudage ultrasonique et de l'assemblage par le biais d'une couche adhésive sensible à la pression.

14. Procédé de fabrication d'un stratifié étirable selon la revendication 13, dans lequel l'activation du tissu non tissé à hydroenchevêtrement à longues fibres, et l'assemblage du tissu non tissé activé et de la couche élastomère l'un à l'autre sont réalisés en continu en ligne.

15. Procédé de fabrication d'un stratifié étirable selon la revendication 13 ou 14, comprenant en outre activer le tissu non tissé et la couche élastomère assemblés l'un à l'autre.

16. Procédé de fabrication d'un stratifié étirable selon l'une quelconque des revendications 13 à 15, comprenant en outre rétrécir le tissu non tissé à hydroenchevêtrement à longues fibres dans une première direction.
